# EUROPEAN PATENT SPECIFICATION

(11) **EP 2 152 536 B1**
(45) Date of publication and mention of the grant of the patent: **20.06.2012**
(21) Application number: 08750873.5
(22) Date of filing: 02.05.2008
(51) Int. Cl.: B60K 17/354, B60K 6/445, B60K 6/448, B60K 5/02, B60K 6/24, B60K 6/48, B60K 6/52, B60K 17/356

(54) **FOUR-WHEEL DRIVE HYBRID VEHICLE**
HYBRIDFAHRZEUG MIT VIERRADANTRIEB
VÉHICULE HYBRIDE À QUATRE ROUES MOTRICES

(30) Priority: 03.05.2007 IT BO20070316
(43) Date of publication of application: 17.02.2010
(73) Proprietor: FERRARI S.p.A., 41100 Modena (IT)
(72) Inventor: RIOLI, Mauro, I-41049 Sassuolo (IT)
(74) Representative: Maccagnan, Matteo
(86) International application number: PCT/IB2008/001084
(87) International publication number: WO 2008/135838

(56) References cited:
- EP-A- 1 291 219
- EP-A- 1 671 832
- DE-A1- 10 314 182
- FR-A- 2 832 357
- US-A- 1 853 058
- US-A- 5 909 094
- US-A- 5 947 855

## Description

### FIELD OF THE INVENTION

The present invention relates to a four-wheel drive hybrid vehicle.

The present invention is advantageously applied to a car, to which the following description explicitly refers without any loss of generality.

### PRIOR ART

Existing high performance sports cars have rear-wheel drive and are provided with a self-locking differential gear which is intended to maximize the torque transmitted by the rear wheels to the road surface in all conditions.

The rear-wheel drive system with self-locking differential gear is a premium for sports driving with either optimal grip conditions (dry road) or reasonable grip conditions (wet road); however, such a solution in combination with a high engine torque and large-sized tyres entails very difficult and potentially dangerous driving in poor grip conditions (flooded or icy road). The use of permanent or insertable four-wheel drive has been proposed in order to improve the driveability of sports cars in poor grip conditions.

Whilst permanent four-wheel drive considerably improves the behaviour of motor vehicles in poor grip conditions, it presents the drawback of increasing loss of torque in the transmission system and conferring to the car a behaviour in optimal grip conditions which is not always appreciated by drivers.

Insertable four-wheel drive allows the driver to decide whether to use rear-wheel drive or four-wheel drive; in this way, the driver may use rear-wheel drive in optimal grip conditions and four-wheel drive in poor grip conditions.

The use of a hybrid power system comprising an internal combustion engine and at least one electric motor has been proposed to implement a car with insertable four-wheel drive. However, the solutions proposed in the prior art for producing a four-wheel drive hybrid vehicle are complex to implement, are bulky and are generally not suitable for use in high-performance sports cars.

Patent application US2005116680A1 describes a four-wheel drive hybrid vehicle, in which two wheels are driven only by the combustion engine and the other two are driven only by the electric motor.

Patent application US2003054910A1 describes a four-wheel drive hybrid vehicle comprising an internal combustion engine arranged at the rear and provided with a gearbox that transmits power to both the rear driving wheels via a rear differential gear device and to the front driving wheels via a front differential gear device. The gearbox transmits power to the front differential gear device via a drive shaft, a drive unit, and a further drive shaft. The drive unit comprises a planetary gear device comprising a first rotating element (planet carrier) connected to the drive shaft and to a stator of an electric motor, a second rotating element (ring gear) connected to the drive shaft, and a third rotating element (sun gear) connected to a rotor of the electric motor.

Patent application US2002061801A1 describes a four-wheel drive hybrid vehicle comprising an internal combustion engine arranged at the front that transmits power to the front driving wheels and an electric motor arranged at the back that transmits power to the rear driving wheels.

Patent US6549840B1 describes a four-wheel drive hybrid vehicle comprising a first drive power source for transmitting power to the front driving wheels and a second drive power source for transmitting power to the rear driving wheels. The first drive power source comprises an internal combustion engine, a first reversible electric motor, and a planetary gear device having a first rotating element (sun gear) connected to the crankshaft of the internal combustion engine, a second rotating element (planet carrier) connected to the rotor of the first reversible electric motor, and a third rotating element (ring gear) connected to a continuously variable transmission connected to the front driving wheels. The second drive power source comprises a second reversible electric motor connected to the rear driving wheels via a cascade gear set and a rear differential gear device.

US1853058A1 discloses a four-wheel drive hybrid vehicle comprising: two first wheels arranged on a same axis; two second wheels arranged on a same axis; an internal combustion engine provided with a crankshaft; a first transmission line, which originates from a first power take-off end of the crankshaft, transmits the power to the first wheels, and comprises a gearbox, and a first differential gear device; and a second transmission line, which originates from a second power take-off end of the crankshaft opposite the first power take-off-end, transmits the power to the second wheels, and comprises a second differential gear device.

DE10314182A1 discloses a hybrid vehicle; said vehicle comprising:
two first wheels arranged on a same axis;
two second wheels arranged on a same axis;
an internal combustion engine provided with a crankshaft;
a transmission line, which originates from a power take-off end of the crankshaft, transmits the power to the first wheels, and comprises a gearbox, and a first differential gear device; and
at least one battery to store electric energy, and a first reversible electric machine controlled by a first drive connected electrically to the battery; wherein
   a) the transmission line comprises a planetary gear device, which comprises a first rotating element mechanically connected to the crankshaft, a second rotating element mechanically connected to the second differential gear device, and a third rotating element mechanically connected to the first electrically reversible machine;
   b) when the first reversible electric machine is off no engine torque is transmitted from the combustion engine to the second wheels, and the first reversible electric machine is activated to transmit engine torque from the combustion engine to the second wheels;
   c) by controlling the first reversible electric machine the planetary gear device adjusts the speed between the speed of rotation of the crankshaft and the speed of rotation of the second wheels.

FR2832357A1 discloses a power transmission device between a heat engine and the wheels of a vehicle, said device comprising two electric machines, two planetary gear trains connecting the heat engine and the electric machines with one another and to the vehicle wheels, a mechanical switching device shifting the transmission device from one operating mode to another each transmission mode corresponding to a different range of transmission ratios, the switching device enabling to connect one of the electric machines directly to the vehicle wheels and a control device monitoring the heat engine, the two electric machines and the mechanical switching device, so that the operating points of the heat engine and of the electric machines correspond to the minimum instantaneous consumption and enable to provide the required power to the wheels.

### DESCRIPTION OF THE INVENTION

The purpose of the present invention is to provide a four-wheel drive hybrid vehicle that overcomes the drawbacks described above and is, at the same time, easy and cost-effective to implement.

According to the present invention a four-wheel drive hybrid vehicle is described as set forth in the appended claims.

### BRIEF DESCRIPTION OF THE DRAWINGS

The present invention will now be described with reference to the attached drawings, illustrating a nonlimiting embodiment thereof, in which:
- figure 1 is a schematic plan view of a four-wheel drive hybrid vehicle implemented according to the present invention;
- figure 2 is a schematic plan view of a different four-wheel drive hybrid car; and
- figure 3 is a schematic plan view of a further four-wheel drive hybrid car.

### PREFERRED EMBODIMENTS OF THE INVENTION

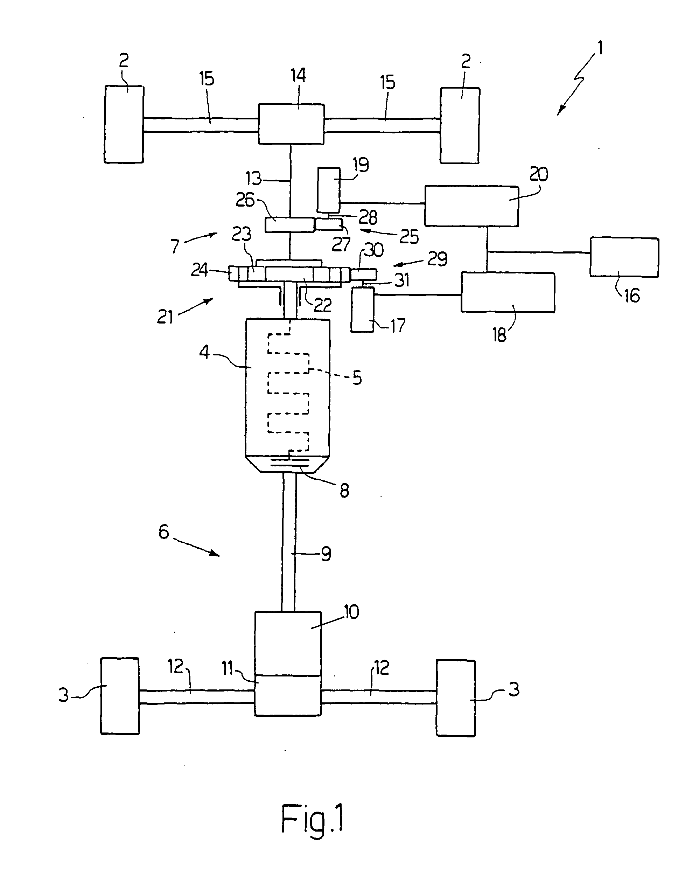

In figure 1, number 1 indicates a car provided with two front driving or driven wheels 2 arranged on a same axis and two rear driving or driven wheels 3 arranged on a same axis. The car 1 comprises an internal combustion engine 4, which is arranged at the front and is provided with a crankshaft 5 which in use is made to rotate. The crankshaft 5 of the combustion engine 4 transmits power to the rear wheels 3 via a transmission line 6, which originates from a rear power take-off end of the crankshaft 5, and transmits power to the front wheels 2 via a transmission line 7, which originates from a front power take-off end of the crankshaft 5 opposite the rear power take-off end.

The transmission line 6 comprises a dry or oil bath clutch 8, which is housed in a casing integral with the engine 4 and is suitable to link the crankshaft 5 of the engine 4 to a rear drive shaft 9 terminating in a mechanical gearbox 10 arranged at the rear; the gearbox 10 is connected via a cascade gear set to a rear self-locking differential gear device 11 from which a pair of axle shafts 12 originate, each of which is connected to a rear driving wheel 3. In particular, a first shaft of the gearbox 10 is connected to the drive shaft 9, while a second shaft of the gearbox 10 is coupled to the self-locking rear differential gear device 11.

The transmission line 7 comprises a front drive shaft 13, which is connected to a front differential gear device 14, from which a pair of axle shafts 15 originate, each of which is connected to a front driving wheel 3.

Moreover, the transmission line 7 comprises at least a battery 16 for storing electric power, a reversible electric machine 17 (i.e. which can act as a motor absorbing electric power and generating mechanical work, and as a generator absorbing mechanical work and generating electric power) controlled by a drive 18 connected electrically to the battery 16, and a reversible electric machine 12 controlled by a drive 20 connected electrically to the battery 16.

Lastly, the transmission line 7 comprises a planetary gear device 21, which comprises a rotating element 22 mechanically connected to the crankshaft 5, a rotating element 23 mechanically connected to the front differential gear device 14 via the front drive shaft 13, and a rotating element 24 mechanically connected to the reversible electric machine 17. In the embodiment illustrated in figure 1, the rotating element 22 of the planetary gear device 21 is a sun gear, the rotating element 23 of the planetary gear device 21 is a planet carrier bearing satellite gears, and the rotating element 24 of the planetary gear device 21 is a ring gear. According to an alternative embodiment that is not illustrated, the rotating element 22 of the planetary gear device 21 is a planet carrier bearing satellite gears, the rotating element 23 of the planetary gear device 21 is a sun gear, and the rotating element 24 of the planetary gear device 21 is a ring gear.

The reversible electric machine 19 is connected mechanically to the front drive shaft 13 and is thus connected mechanically to both the rotating element 23 of the planetary gear device 21 and to the front differential gear device 14. In the embodiment illustrated in figure 1, the reversible electric machine 19 is connected mechanically to the front drive shaft 13 via a gear transmission system 25, which consists of a toothed wheel 26 keyed to the front drive shaft 13 and a toothed wheel 27 keyed to a shaft 28 of the reversible electric machine 19. Preferably, the toothed wheel 27 has a diameter smaller than that of the toothed wheel 26 so that the gear transmission system 25 has a motion reduction ratio. According to a different embodiment that is not illustrated, the front drive shaft 13 also acts as a shaft of the reversible electric machine 19 and thus a rotor of the reversible electric machine 19 is keyed directly to the drive shaft 13.

The reversible electric machine 17 is also connected mechanically to the rotating element 23 of the planetary gear device 21 by means of a gear transmission system 29, which comprises a toothed wheel 30 that meshes with the rotating element 23 of the planetary gear device 21 and is keyed to a shaft 31 of the reversible electric machine 17.

In the embodiment illustrated in figure 1, the combustion engine 4 is connected via the gearbox 10 to the rear wheels 3 and is connected via the planetary gear device 21 to the front wheels 2. According to an alternative embodiment that is not illustrated, the combustion engine 4 is connected via the gearbox 10 to the front wheels 2 and is connected via the planetary gear device 21 to the rear wheels 3.

In the embodiment illustrated in figure 1, the combustion engine 4 and the clutch 8 are arranged at the front and the gearbox 10 is arranged at the back. According to an alternative embodiment that is not illustrated, the gearbox 10 is also arranged at the front. According to a further embodiment that is not illustrated, the combustion engine 4 is arranged centrally and the clutch 8 and the gearbox 10 are arranged at the back.

When the reversible electric machine 17 is off no engine torque is transmitted from the combustion engine 4 to the front wheels 2; the reversible electric machine 17 must be activated for engine torque to be transmitted from the internal combustion engine 4 to the front wheels 2. In particular, by controlling the reversible electric machine 17, the planetary gear device 21 performs speed adjustment between the speed of rotation of the crankshaft 5 and the speed of rotation of the two front wheels 2. It is in fact important to note that the ratio between the speed of rotation of the crankshaft 5 and the speed of rotation of the front wheels 2 (which must be identical to the speed of rotation of the rear wheels 3) is variable according to the gear engaged in the gearbox 10.

If the speed of rotation of the rotating element 22 of the planetary gear device 21 is greater than the speed of rotation of the rotating element 23 of the planetary gear device 21 the reversible electric machine 17 acts as a motor so that the rotating element 24 of the planetary gear device 21 rotates in the opposite direction to the rotating element 22 of the planetary gear device 21 to compensate for the difference in speed between the rotating elements 22 and 23 of the planetary gear device 21. If the speed of rotation of the rotating element 22 of the planetary gear device 21 is lower than the speed of rotation of the rotating element 23 of the planetary gear device 21 the reversible electric machine 17 acts as a generator so that the rotating element 24 of the planetary gear device 21 rotates in the same direction as the rotating element 22 of the planetary gear device 21 to compensate for the difference in speed between the rotating elements 22 and 23 of the planetary gear device 21. If the speed of rotation of the rotating element 22 of the planetary gear device 21 is identical to the speed of rotation of the rotating element 23 of the planetary gear device 21 the reversible electric machine 17 acts as a static brake and holds the rotating element 24 of the planetary gear device 21 still.

According to a preferred embodiment, the gear ratios of the two transmission lines 6 and 7 are dimensioned so that when one of the gears in the gearbox 10 is engaged the speed of rotation of the rotating element 22 of the planetary gear device 21 is identical to the speed of rotation of the rotating element 23 of the planetary gear device 21.

According to another alternative embodiment that is not illustrated, the front transmission line 7 does not envisage the reversible electric machine 19.

All the possible methods of operation of the power system of the car 1 are now described.

When the combustion engine 4 is running both the reversible electric machines 17 and 19 are off, the car 1 is powered by the combustion engine only with traction on the rear driving wheels 3 only while the front wheels 2 are driven.

When the combustion engine 4 is running, the reversible electric machine 17 is active and the reversible electric machine 19 is off, the car 1 is powered by the combustion engine only and has four-wheel drive (all four wheels 2 and 3 are driving wheels).

When the combustion engine 4 is running and both reversible electric machines 17 and 19 are active the car 1 can either by powered by the combustion engine only and have four-wheel drive if the reversible electric machine 19 acts as a generator (in this case with a regenerative braking function or battery 16 recharging function), or the car 1 can be powered by both the combustion engine and electrically and have four-wheel drive if the reversible electric machine 19 acts as a motor (in this case with an electric boost function to make maximum torque available in case of acceleration to the limit).

When the combustion engine 4 is running, the reversible electric machine 17 is off and the reversible electric machine 19 is active, the car 1 can be powered by the combustion engine only and have rear-wheel drive if the reversible electric machine 19 acts as a generator (in this case with a regenerative braking function or battery 16 recharging function), or the car 1 can be powered by both the combustion engine and electrically and have four-wheel drive if the reversible electric machine 19 acts as a motor (in this case with an electric boost function to make maximum torque available in case of acceleration to the limit).

When the combustion engine 4 is off, the reversible electric machine 17 is necessarily off, the clutch 8 is disengaged and the reversible electric machine 19 is necessarily active to act as a motor (front-wheel drive and electrically powered only) or as a generator (to perform regenerative braking only).

It is important to note that the two reversible electric machines 17 and 19 can be used to start the combustion engine 4; in particular, to start the combustion engine 4 the clutch 8 is disengaged, the reversible electric machine 19 acts as a static brake and holds the rotating element 23 of the planetary gear device 21 still (alternatively the brakes of the two front wheels 2 could be used to hold the rotating element 23 of the planetary gear device 21 still), and the reversible electric machine 17 acts as a motor to make the rotating element 24 of the planetary gear device 21 rotate and thus (since the rotating element 23 of the planetary gear device 21 is blocked) the rotating element 21 of the planetary gear device 21 connected to the crankshaft 5 which is thus made to rotate.

From the description provided above it is apparent that the four-wheel drive system can be inserted quickly and automatically when necessary, i.e. in case of wheel slip on the rear wheels 3 which are normally the driving wheels. Moreover, the reversible electric machines 17 and 19 can be used to perform a regenerative braking function, to obtain electric boosting, or to provide electric power only (clearly over short distances the length of which depends on the capacity of the battery 16).

According to a further embodiment, the gearbox 10 is servo-assisted, i.e. it is structurally similar to a conventional manual gearbox except for the fact that the clutch pedal and the gearshift lever that can be operated by the user have been replaced by corresponding electric or hydraulic servo controls.

A gear change command can be generated manually, i.e. following a command sent by the driver, or automatically, i.e. regardless of any action by the driver. When a change gear command is generated, the control unit of the transmission system controls the servo control associated with the clutch 8 to disengage the clutch 8 in order to mechanically uncouple the first shaft of the gearbox 10 from the crankshaft 5; at the same time, the control unit of the transmission system acts on the control unit of the combustion engine 4 to temporarily reduce, if necessary, the torque supplied by said combustion engine 4.

Once the control unit of the transmission system has verified the disengagement of the clutch 8, the control unit of the transmission system controls the servo controls associated with the gearbox 10 to disengage the gear that is currently engaged; when the control unit of the transmission system has verified the disengagement of the gear, the control unit of the transmission system controls the servo controls associated with the gearbox 10 to engage the new gear. Lastly, when the control unit of the transmission system has verified the engagement of the new gear, the control unit of the transmission system controls the servo control associated with the clutch 8 to engage the clutch 8 so that the first shaft of the gearbox 10 and the crankshaft 5 are angularly coupled to one another; at the same time, the control unit of the transmission system acts on the control unit of the combustion engine 4 to restore, if necessary, the torque supplied by said engine 4.

It is apparent that for the entire time during which the clutch 8 is disengaged the crankshaft 5 is disconnected from the first shaft of the gearbox 10 and thus from the rear driving wheels 3; consequently, for the entire time during which the clutch 8 is disengaged the torque generated by the combustion engine 4 is not transmitted to the rear driving wheels 3, or, in other words, a "gap" occurs in the torque supplied to the rear driving wheels 3. The latest generation servo-assisted gearboxes available on the market that work on the basis of the procedure described above generally require a time of between 150 and 300 ms to perform a change of gear in the gearbox 10; the time that is actually taken depends on the dynamic efficiency of the components of the gearbox 10 and the desired level of comfort. Consequently, the gap in the torque supplied to the rear driving wheels 3 caused by a change of gear in the gearbox 10 is clearly felt by the occupants of the car 1, as it results in a not inconsiderable discontinuity in the longitudinal acceleration of the car 1.

It is important to note that the gap in the torque supplied to the rear driving wheels 3 caused by a change of gear in the gearbox 10 is clearly felt by the occupants of the car 1 when the car 1 is accelerating, i.e. during upshifting (shifting from a lower gear to a higher gear) or during downshifting while accelerating (shifting from a higher gear to a lower gear similar to "kick-down" in a conventional automatic transmission system), as during the acceleration of the car 1 the combustion engine is "under pressure" to make said car 1 accelerate. On the other hand, when the car 1 is slowing down, i.e. during downshifting while decelerating (shifting from a higher gear to a lower gear) the gap in the torque supplied to the rear driving wheels 3 due to a change of gear in the gearbox 10 is not usually felt by the occupants of the car 1, since the car 1 is essentially slowed down by the braking system and the combustion engine 4 does not have an essential role in the dynamics of the car 1.

According to a possible embodiment, during a change of gear in the gearbox 10, i.e. for the entire time during which the clutch 8 is disengaged, the reversible electric machine 19 can be activated to act as an electric motor in order to supply torque to the front wheels 2 to compensate, at least partially, for the gap in the torque supplied to the rear wheels 3 due to the disengagement of the clutch 8.

Alternatively, during a change of gear in the gearbox 10, i.e. for the entire time during which the clutch 8 is disengaged, the reversible electric machine 17 can be activated to transmit the torque generated by the combustion engine 4 to the front wheels 2 to compensate, at least partially, for the gap in the torque supplied to the rear wheels 3 due to the disengagement of the clutch 8.

To compensate, at least partially, for the gap in the torque supplied to the rear wheels 3 due to the disengagement of the clutch 8, both reversible electric machines 17 and 19 could of course be activated together.

The car 1 described above has a number of advantages, in that it is simple and cost-effective to implement, has reduced overall dimensions and is very well suited to the characteristics of a high performance sports car.

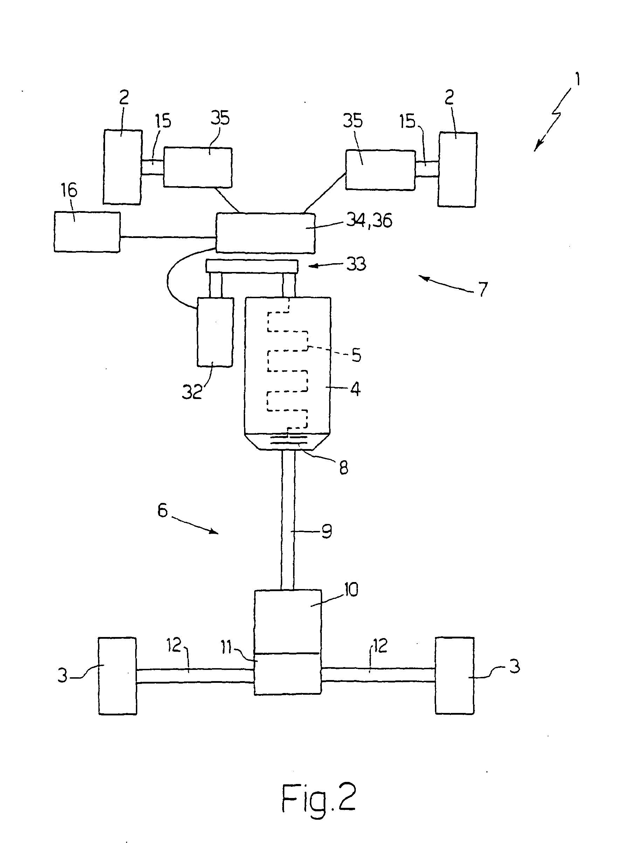

In figure 2, number 1 indicates a car provided with two front driving or driven wheels 2 arranged on a same axis and two rear driving or driven wheels 3 arranged on a same axis. The car 1 comprises an internal combustion engine 4, which is arranged at the front and is provided with a crankshaft 5 which in use is made to rotate. The crankshaft 5 of the combustion engine 4 transmits power to the rear wheels 3 via a transmission line 6, which originates from a rear power take-off end of the crankshaft 5, and transmits power to the front wheels 2 via a transmission line 7, which originates from a front power take-off end of the crankshaft 5 opposite the rear power take-off end.

The transmission line 6 comprises a dry or oil bath clutch 8, which is housed in a casing integral with the engine 4 and is suitable to link the crankshaft 5 of the engine 4 to a rear drive shaft 9 terminating in a mechanical gearbox 10 arranged at the rear; the gearbox 10 is connected via a cascade gear set to a rear self-locking differential gear device 11 from which a pair of axle shafts 12 originate, each of which is connected to a rear driving wheel 3. In particular, a first shaft of the gearbox 10 is connected to the drive shaft 9, while a second shaft of the gearbox 10 is coupled to the self-locking rear differential gear device 11.

The transmission line 7 comprises at least a battery 16 to store electric energy, a reversible electric machine 32, which is connected to the crankshaft 5 by means of a belt or gear transmission system 33 and is controlled by a drive 34 connected electrically to the battery 16, and a pair of reversible electric machines 35 which are connected to respective front axle shafts 15 connected to the front wheels 2 and are controlled by respective drives 36 electrically connected to the battery 16. Alternatively, the reversible electric machines 35 could be integrated directly into the respective front wheels 2, or there could be a single reversible electric machine 35 connected to the front wheels 2 via a front differential gear device.

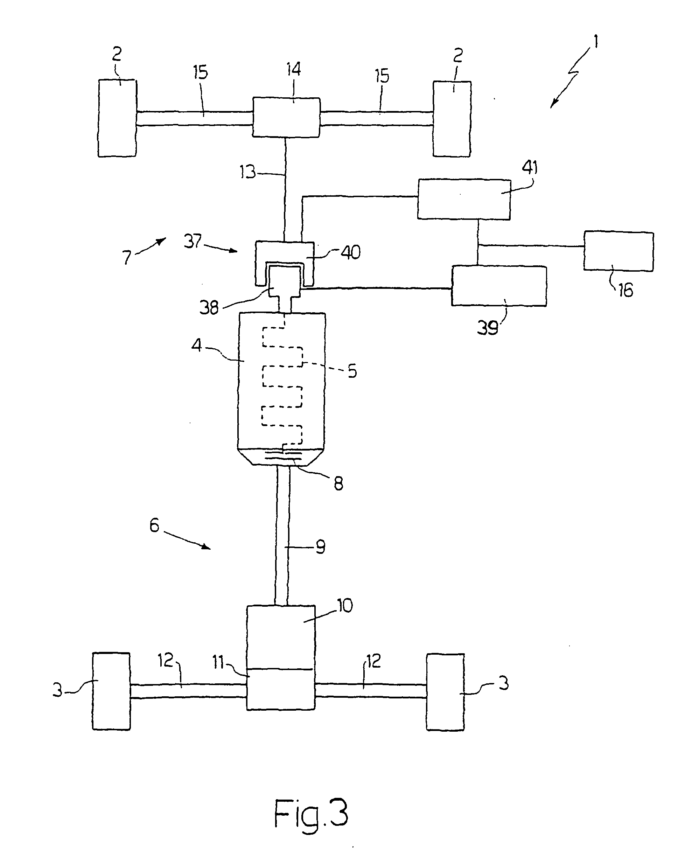

In figure 3, number 1 indicates a car provided with two front driving or driven wheels 2 arranged on a same axis and two rear driving or driven wheels 3 arranged on a same axis. The car 1 comprises an internal combustion engine 4, which is arranged at the front and is provided with a crankshaft 5 which in use is made to rotate. The crankshaft 5 of the combustion engine 4 transmits power to the rear wheels 3 via a transmission line 6, which originates from a rear power take-off end of the crankshaft 5, and transmits power to the front wheels 2 via a transmission line 7, which originates from a front power take-off end of the crankshaft 5 opposite the rear power take-off end.

The transmission line 6 comprises a dry or oil bath clutch 8, which is housed in a casing integral with the engine 4 and is suitable to link the crankshaft 5 of the engine 4 to a rear drive shaft 9 terminating in a mechanical gearbox 10 arranged at the rear; the gearbox 10 is connected via a cascade gear set to a rear self-locking differential gear device 11 from which a pair of axle shafts 12 originate, each of which is connected to a rear driving wheel 3. In particular, a first shaft of the gearbox 10 is connected to the drive shaft 9, while a second shaft of the gearbox 10 is coupled to the self-locking rear differential gear device 11.

The transmission line 7 comprises at least a battery 16 to store electric energy, and a reversible electric machine 37, which constitutes an electromagnetic coupling and connects the crankshaft 5 to the front drive shaft 13 which transmits power to the front wheels 2 via a front differential gear device 14. The reversible electric machine 37 comprises a rotor 38, which is keyed to the crankshaft 5 and is controlled by a drive 39 connected electrically to the battery 16, and an inductor 40, magnetically coupled to the rotor 38, which is keyed to the front drive shaft 13 and is controlled by a drive 41 connected electrically to the battery 16. According to an alternative embodiment, the rotor 38 is keyed to the front drive shaft and the inductor 40 is keyed to the crankshaft 5.

In use, when the rotor 38 and/or the inductor 40 are suitably excited engine torque can be transmitted from the crankshaft 5 to the front drive shaft 13 and thus to the normally driven front wheels 2. For brief periods, the reversible electric machine 37 can also be used as an electric motor to generate additional torque (electric boost) to apply to the front wheels 2 if necessary. Moreover, the reversible electric machine 37 can be used as a generator to perform a regenerative braking function (acting on the front wheels 2 which discharge most of the braking torque to the ground) when the vehicle is slowing down.

Lastly, the reversible electric machine 37 can be used to start the internal combustion engine 4; in this case the car 1 must be at a standstill and the front brakes must be applied to block the front wheels 2, and thus the front differential gear device 14, the front drive shaft 13 and the part of the reversible electric machine 37 connected to the front drive shaft 13.

## Claims

1. Four-wheel drive hybrid vehicle (1); said vehicle (1) comprising:
two first wheels (3) arranged on a same axis;
two second wheels (2) arranged on a same axis;
an internal combustion engine (4) provided with a crankshaft (5);
a first transmission line (6), which originates from a first power take-off end of the crankshaft (5), transmits the power to the first wheels (3), and comprises a gearbox (10), and a first differential gear device (11) ; and
a second transmission line (7), which originates from a second power take-off end of the crankshaft (5) opposite the first power take-off end, transmits the power to the second wheels (2), and comprises a second differential gear device (14), at least one battery (16) to store electric energy, and a first reversible electric machine (17) controlled by a first drive (18) connected electrically to the battery (16);
wherein:
a) the second transmission line (7) comprises a planetary gear device (21), which comprises a first rotating element (22) mechanically connected to the crankshaft (5), a second rotating element (23) mechanically connected to the second differential gear device (14), and a third rotating element (24) mechanically connected to the first electrically reversible machine (17);
b) when the first reversible electric machine (17) is off no engine torque is transmitted from the combustion engine (4) to the second wheels (2), and the first reversible electric machine (17) is activated to transmit engine torque from the combustion engine (4) to the second wheels (2);
c) by controlling the first reversible electric machine (17) the planetary gear device (21) adjusts the speed between the speed of rotation of the crankshaft (5) and the speed of rotation of the second wheels (2);
d) if the speed of rotation of the first rotating element (22) of the planetary gear device (21) is greater than the speed of rotation of the second rotating element (23) of the planetary gear device (21) the first reversible electric machine (17) acts as a motor;
e) if the speed of rotation of the first rotating element (22) of the planetary gear device (21) is lower than the speed of rotation of the second rotating element (23) of the planetary gear device (21) the first reversible electric machine (17) acts as a generator.

2. Four-wheel drive vehicle (1) according to claim 1, wherein the first rotating element (22) of the planetary gear device (21) is a sun gear, the second rotating element (23) of the planetary gear device (21) is a planet carrier bearing satellite gears, and the third rotating element (24) of the planetary gear device (21) is a ring gear.

3. Four-wheel drive vehicle (1) according to claim 1 or 2, wherein the second transmission line (7) comprises a second reversible electric machine (19), which is controlled by a second drive (20) connected electrically to the battery (16) and connected mechanically to the second rotating element (23) of the planetary gear device (21).

4. Four-wheel drive vehicle (1) according to claim 3, wherein the second transmission line (7) comprises a second drive shaft (13), which is connected at one end to the second rotating element (23) of the planetary gear device (21) and at the other end to the second differential gear device (14); the second reversible electric machine (19) is connected mechanically to the second drive shaft (13).

5. Four-wheel drive vehicle (1) according to claim 4, wherein the second reversible electric machine (19) is connected mechanically to the second drive shaft (13) via a gear transmission system (25).

6. Four-wheel drive vehicle (1) according to claim 5, wherein the gear transmission system (25) comprises a first toothed wheel (26) keyed to the second drive shaft (13) and a second toothed wheel (27) keyed to a shaft of the second reversible electric machine (19).

7. Four-wheel drive vehicle (1) according to claim 4, wherein the second drive shaft (13) also acts as a shaft of the second reversible electric machine (19) and a rotor of the second reversible electric machine (19) is directly keyed to the second drive shaft (13).

8. Four-wheel drive vehicle (1) according to one of the claims from 1 to 7, wherein the first wheels (3) are the rear wheels, the second wheels (2) are the front wheels, and the gearbox (10) is arranged at the back.

9. Four-wheel drive vehicle (1) according to claim 8, wherein the combustion engine (4) is arranged at the front.

10. Four-wheel drive vehicle (1) according to claim 8, wherein the combustion engine (4) is arranged centrally; the clutch (8) and the gearbox (10) are arranged at the back.

11. Four-wheel drive vehicle (1) according to one of the claims from 1 to 10, wherein the gearbox (10) of the first transmission line (6) is a servo-assisted gearbox coupled to a clutch (8); during a change of gear in the gearbox (10) of the first transmission line (6), the second transmission line (7) is used to transmit torque to the second wheels (2) so as to compensate, at least partially, for the gap in the torque supplied to the first wheels (3) as a consequence of the disengagement of the clutch (8).

## Patentansprüche

1. Hybridfahrzeug (1) mit Vierradantrieb; wobei das Fahrzeug (1) aufweist:
zwei erste Räder (3), die auf einer selben Achse angeordnet sind;
zwei zweite Räder (2), die auf einer selben Achse angeordnet sind;
einen Verbrennungsmotor (4), der mit einer Kurbelwelle (5) versehen ist;
einen ersten Kraftübertragungszug (6), der von einem ersten Abtriebsende der Kurbelwelle (5) ausgeht, die Kraft zu den ersten Rädern (3) überträgt und ein Getriebe (10) sowie ein erstes Differentialgetriebe (11) aufweist; und
einen zweiten Kraftübertragungszug (7), der von einem zum ersten Abtriebsende entgegengesetzten zweiten Abtriebsende der Kurbelwelle (5) ausgeht, die Kraft zu den zweiten Rädern (2) überträgt, und ein zweites Differentialgetriebe (14), mindestens eine Batterie (16), um elektrische Energie zu speichern, und eine erste reversierbare elektrische Maschine (17) aufweist, die durch einen ersten Antrieb (18) gesteuert wird, der mit der Batterie (16) elektrisch verbunden ist;
wobei
a) der zweite Kraftübertragungszug (7) eine Planetengetriebevorrichtung (21) aufweist, die aufweist: ein erstes rotierendes Element (22), das mit der Kurbelwelle (5) mechanisch verbunden ist, ein zweites rotierendes Element (23), das mit dem zweiten Differentialgetriebe (14) mechanisch verbunden ist, und ein drittes rotierendes Element (24), das mit der ersten elektrisch reversierbaren Maschine (17) mechanisch verbunden ist;
b) im Aus-Zustand der ersten reversierbaren elektrischen Maschine (17) kein Motordrehmoment vom Verbrennungsmotor (4) zu den zweiten Rädern (2) übertragen wird und die erste reversierbare elektrische Maschine (17) aktiviert ist, um ein Motordrehmoment vom Verbrennungsmotor (4) zu den zweiten Rädern (2) zu übertragen;
c) durch Steuern der ersten reversierbaren elektrischen Maschine (17) die Planetengetriebevorrichtung (21) die Geschwindigkeit zwischen der Drehzahl der Kurbelwelle (5) und der Drehzahl der zweiten Räder (2) einstellt;
d) wenn die Drehzahl des ersten rotierenden Elements (22) der Planetengetriebevorrichtung (21) größer als die Drehzahl des zweiten rotierenden Elements (23) der Planetengetriebevorrichtung (21) ist, die erste reversierbare elektrische Maschine (17) als Motor wirkt;
e) wenn die Drehzahl des ersten rotierenden Elements (22) der Planetengetriebevorrichtung (21) niedriger als die Drehzahl des zweiten rotierenden Elements (23) der Planetengetriebevorrichtung (21) ist, die erste reversierbare elektrische Maschine (17) als Generator wirkt.

2. Fahrzeug (1) mit Vierradantrieb nach Anspruch 1, wobei das erste rotierende Element (22) der Planetengetriebevorrichtung (21) ein Sonnenrad ist, das zweite rotierende Element (23) der Planetengetriebevorrichtung (21) ein Planetenträger ist, der Planetenräder trägt, und das dritte rotierende Element (24) der Planetengetriebevorrichtung (21) ein Hohlrad ist.

3. Fahrzeug (1) mit Vierradantrieb nach Anspruch 1 oder 2, wobei der zweite Kraftübertragungszug (7) eine zweite reversierbare elektrische Maschine (19) aufweist, die durch einen zweiten Antrieb (20) gesteuert wird, der mit der Batterie (16) elektrisch und mit dem zweiten rotierenden Element (23) der Planetengetriebevorrichtung (21) mechanisch verbunden ist.

4. Fahrzeug (1) mit Vierradantrieb nach Anspruch 3, wobei der zweite Kraftübertragungszug (7) eine zweite Antriebswelle (13) aufweist, die an einem Ende mit dem zweiten rotierenden Element (23) der Planetengetriebevorrichtung (21) und am anderen Ende mit dem zweiten Differentialgetriebe (14) verbunden ist, und die zweite reversierbare elektrische Maschine (19) mit der zweiten Antriebswelle (13) mechanisch verbunden ist.

5. Fahrzeug (1) mit Vierradantrieb nach Anspruch 4, wobei die zweite reversierbare elektrische Maschine (19) mit der zweiten Antriebswelle (13) über ein Räderübertragungssystem (25) verbunden ist.

6. Fahrzeug (1) mit Vierradantrieb nach Anspruch 5, wobei das Räderübertragungssystem (25) aufweist: ein erstes Zahnrad (26), das mit der zweiten Antriebswelle (13) verkeilt ist, und ein zweites Zahnrad (27), das mit einer Welle der zweiten reversierbaren elektrischen Maschine (19) verkeilt ist.

7. Fahrzeug (1) mit Vierradantrieb nach Anspruch 4, wobei die zweite Antriebswelle (13) auch als Welle der zweiten reversierbaren elektrischen Maschine (19) wirkt und ein Läufer der zweiten reversierbaren elektrischen Maschine (19) direkt mit der zweiten Antriebswelle (13) verkeilt ist.

8. Fahrzeug (1) mit Vierradantrieb nach einem der Ansprüche 1 bis 7, wobei die ersten Räder (3) die Hinterräder sind, die zweiten Räder (2) die Vorderräder sind und das Getriebe (10) am Heck angeordnet ist.

9. Fahrzeug (1) mit Vierradantrieb nach Anspruch 8, wobei der Verbrennungsmotor (4) an der Front angeordnet ist.

10. Fahrzeug (1) mit Vierradantrieb nach Anspruch 8, wobei der Verbrennungsmotor (4) mittig angeordnet ist und die Kupplung (8) und das Getriebe (10) am Heck angeordnet sind.

11. Fahrzeug (1) mit Vierradantrieb nach einem der Ansprüche 1 bis 10, wobei das Getriebe (10) des ersten Kraftübertragungszugs (6) ein mit einer Kupplung (8) gekoppeltes Servogetriebe ist, während eines Gangwechsels im Getriebe (10) des ersten Kraftübertragungszugs (6) der zweite Kraftübertragungszug (7) verwendet wird, Drehmoment zu den zweiten Rädern (2) zu übertragen, um mindestens teilweise die Unterbrechung des den ersten Rädern (3) zugeführten Drehmoments als Folge des Ausrückens der Kupplung (8) zu kompensieren.

## Revendications

1. Véhicule hybride à quatre roues motrices (1) ; ledit véhicule (1) comprenant :
deux premières roues (3) disposées sur un même axe ;
deux deuxièmes roues (2) disposées sur un même axe ;
un moteur à combustion interne (4) muni d'un vilebrequin (5) ;
une première ligne de transmission (6), qui vient d'une première extrémité de prise d'énergie du vilebrequin (5), qui transmet l'énergie aux premières roues (3), et qui comprend une boîte de vitesses (10) et un premier dispositif d'engrenages de différentiel (11) ; et
une deuxième ligne de transmission (7), qui vient d'une deuxième extrémité de prise d'énergie du vilebrequin (5), opposée à la première extrémité de prise d'énergie, qui transmet l'énergie aux deuxièmes roues (2), et qui comprend un deuxième dispositif d'engrenages de différentiel (14), au moins une batterie (16) pour stocker de l'énergie électrique, et une première machine électrique réversible (17) commandée par un premier dispositif de commande (18) électriquement connecté à la batterie (16) ;
dans lequel :
a) la deuxième ligne de transmission (7) comprend un dispositif de train planétaire (21), qui comprend un premier élément rotatif (22) mécaniquement relié au vilebrequin (5), un deuxième élément rotatif (23) mécaniquement relié au deuxième dispositif d'engrenages de différentiel (14), et un troisième élément rotatif (24) mécaniquement relié à la première machine électriquement réversible (17) ;
b) lorsque la première machine électrique réversible (17) ne fonctionne pas, aucun couple moteur n'est transmis du moteur à combustion (4) aux deuxièmes roues (2), et la première machine électrique réversible (17) est actionnée pour transmettre un couple moteur du moteur à combustion (4) aux deuxièmes roues (2) ;
c) grâce à la commande de la première machine électrique réversible (17), le dispositif de train planétaire (21) ajuste la vitesse entre la vitesse de rotation du vilebrequin (5) et la vitesse de rotation des deuxièmes roues (2) ;
d) si la vitesse de rotation du premier élément rotatif (22) du dispositif de train planétaire (21) est supérieure à la vitesse de rotation du deuxième élément rotatif (23) du dispositif de train planétaire (21), la première machine électrique réversible (17) fonctionne en tant que moteur ;
e) si la vitesse de rotation du premier élément rotatif (22) du dispositif de train planétaire (21) est inférieure à la vitesse de rotation du deuxième élément rotatif (23) du dispositif de train planétaire (21), la première machine électrique réversible (17) fonctionne en tant que générateur.

2. Véhicule à quatre roues motrices (1) selon la revendication 1, dans lequel le premier élément rotatif (22) du dispositif de train planétaire (21) est une roue solaire, le deuxième élément rotatif (23) du dispositif de train planétaire (21) est un porte-satellites portant des engrenages satellites, et le troisième élément rotatif (24) du dispositif de train planétaire (21) est une couronne dentée.

3. Véhicule à quatre roues motrices (1) selon la revendication 1 ou 2, dans lequel la deuxième ligne de transmission (7) comprend une deuxième machine électrique réversible (19), qui est commandée par un deuxième dispositif de commande (20) électriquement connecté à la batterie (16) et mécaniquement relié au deuxième élément rotatif (23) du dispositif de train planétaire (21).

4. Véhicule à quatre roues motrices (1) selon la revendication 3, dans lequel la deuxième ligne de transmission (7) comprend un deuxième arbre d'entraînement (13), qui est relié à une extrémité au deuxième élément rotatif (23) du dispositif de train planétaire (21), et, à l'autre extrémité, au deuxième dispositif d'engrenages de différentiel (14) ; la deuxième machine électrique réversible (19) étant mécaniquement reliée au deuxième arbre d'entraînement (13).

5. Véhicule à quatre roues motrices (1) selon la revendication 4, dans lequel la deuxième machine électrique réversible (19) est mécaniquement reliée au deuxième arbre d'entraînement (13) par l'intermédiaire d'un système de transmission à engrenages (25).

6. Véhicule à quatre roues motrices (1) selon la revendication 5, dans lequel le système de transmission à engrenages (25) comprend une première roue dentée (26) calée sur le deuxième arbre d'entraînement (13) et une deuxième roue dentée (27) calée sur un arbre de la deuxième machine électrique réversible (19).

7. Véhicule à quatre roues motrices (1) selon la revendication 4, dans lequel le deuxième arbre d'entraînement (13) joue également le rôle d'arbre de la deuxième machine électrique réversible (19), et un rotor de la deuxième machine électrique réversible (19) est directement calé sur le deuxième arbre d'entraînement (13).

8. Véhicule à quatre roues motrices (1) selon l'une des revendications 1 à 7, dans lequel les premières roues (3) sont les roues arrière, les deuxièmes roues (2) sont les roues avant, et la boîte de vitesses (10) est disposée à l'arrière.

9. Véhicule à quatre roues motrices (1) selon la revendication 8, dans lequel le moteur à combustion (4) est disposé à l'avant.

10. Véhicule à quatre roues motrices (1) selon la revendication 8, dans lequel le moteur à combustion (4) est disposé de façon centrale ; l'embrayage (8) et la boîte de vitesses (10) étant disposés à l'arrière.

11. Véhicule à quatre roues motrices (1) selon l'une des revendications 1 à 10, dans lequel la boîte de vitesses (10) de la première ligne de transmission (6) est une boîte de vitesses servo-assistée couplée à un embrayage (8) ; durant un changement de vitesse dans la boîte de vitesses (10) de la première ligne de transmission (6), la deuxième ligne de transmission (7) est utilisée pour transmettre un couple aux deuxième roues (2), de façon à compenser, au moins partiellement, le saut dans le couple délivré aux premières roues (3) en conséquence du débrayage de l'embrayage (8).
